# EUROPEAN PATENT APPLICATION

(11) **EP 4 406 795 A1**
(43) Date of publication of application: **31.07.2024**
(21) Application number: 23153728.3
(22) Date of filing: 27.01.2023
(51) Int. Cl.: B60W 30/09, B60W 30/095, B60Q 9/00, B60W 50/16, B60K 37/00, B60W 50/14

(54) **METHOD FOR ASSISTING USER WHILE DRIVING VEHICLE**

(71) Applicant: Aptiv Technologies AG, 8200 Schaffhausen (CH)
(72) Inventor: VIJAYENDRA, Vishwas Bangalore, 42119 Wuppertal (DE); FERNANDEZ GARCIA-VALDECASAS, David, 45130 Essen (DE); KRISHNAN, Rohith, 42117 Wuppertal (DE)
(74) Representative: Lewis Silkin LLP

(57) **Abstract**

The vehicle (200) comprises sensors (120), a processor (180) and a user interface system (170). The method is performed while driving the vehicle and includes:
- receiving, by the processor (180), obstacle information related to an obstacle lower than a threshold height, detected by the at least one sensor (120) in an environment surrounding the vehicle (200), and parameters related to the vehicle (200);
- determining, by the processor (180), a collision score indicative of a risk of collision of the vehicle (200) with the detected obstacle, based on the received obstacle information and parameters related to the vehicle (200); and
- if the collision score is higher than a predetermined threshold, generating a notification in the user interface system (170), wherein said notification comprises information presented to the user in an arrangement for modifying a driving trajectory of the vehicle (200) to avoid the collision with the detected obstacle.

## Description

### TECHNICAL FIELD

The present disclosure relates to a method for assisting a user while driving a vehicle. Such a method can be used in a vehicle manually driven by a user.

### BACKGROUND

While driving a vehicle, a driver has to pay attention to the curbstones and estimate their position relative to the wheels of the vehicle in order to avoid a collision with a curbstone that may cause damage to a wheel.

Known systems, such as advanced driver-assistance systems (ADAS), assist or support the driver in driving and parking functions.

For example, systems support the driving by displaying surround vision images of a surrounding environment of the vehicle on a display device of the vehicle. However, such systems do not properly signalize the curbstones.

There are also ADAS systems that assist the driver while parking or executing maneuvers, based on data from proximity or parking sensors, such as ultrasonics sensors. However, such systems do not properly detect low obstacles such as curbstones. Furthermore, they are only used in parking or maneuver mode, when the speed of the vehicle is very low so that the risk of damage on a wheel caused by a collision with a curb is very low, but not when the vehicle is driving at a certain speed.

In the field of autonomous driving, known detection systems can detect curbs or curbstones to drive autonomously the vehicle without intervention of a driver.

Therefore, there is a need for assisting a user while manually driving a vehicle for the purpose of avoiding collision of the vehicle with a curb or curbstone, for example with the edge of a sidewalk.

### SUMMARY

The present disclosure concerns a method for assisting a user while driving a vehicle, said vehicle comprising at least one sensor, a processor and a user interface system, the method including the steps of
- receiving, by the processor, obstacle information related to an obstacle lower than a threshold height, detected by the at least one sensor in an environment surrounding the vehicle, and parameters related to the vehicle;
- determining, by the processor, a collision score indicative of a risk of collision of the vehicle with the detected obstacle, based on the received obstacle information and parameters related to the vehicle; and
- if the collision score is higher than a predetermined threshold, generating a notification in the user interface system, wherein said notification comprises information presented to the user in an arrangement for modifying a driving trajectory of the vehicle to avoid the collision with the detected obstacle.

The present method allows to assist a user in performing the task of driving, in particular the task of manually driving, a vehicle to avoid a collision with an obstacle or object, such as a curbstone or curb. The term "driving" refers to a mode of vehicle operation in which the vehicle moves at a certain speed, for example higher than a given threshold speed, as opposed to a parking or maneuver mode.

If an obstacle is detected by a sensor while the vehicle is driving, a collision score is computed based on information on the detected curb or curbstone and parameters related to the vehicle (e.g., vehicle speed, vehicle yaw rate, etc.) and compared to a predetermined threshold. If the collision score is higher than the predetermined threshold, a high risk of collision is detected and notified to the user or driver by generating a notification in the user interface system of the vehicle. The notification includes information for signaling the risk of collision that is presented to the user in an arrangement that guides or assists the user for modifying a driving trajectory of the vehicle for the purpose of avoiding the collision with the detected obstacle. The information is conveyed to the user in a manner that continuously assists or guides said user to correct the trajectory, and/or position and/or orientation of the vehicle while driving for the purpose of avoiding the collision with the detected obstacle.

In an embodiment, the parameters related to the vehicle include motion parameters of the vehicle comprising at least part of a longitudinal vehicle speed, a lateral vehicle speed, a yaw rate of the vehicle, a longitudinal acceleration of the vehicle, and a lateral acceleration of the vehicle.

Additionally, or alternatively, the parameters related to the vehicle may include one or more predicted trajectories of the vehicle and, for each predicted trajectory, a likelihood score indicative of the probability that the vehicle will drive along said predicted trajectory. The predicted trajectories and associated likelihood scores can be used as inputs in the step of determining or computing the collision score.

In a variant, the step of receiving further includes receiving information on a driver's gaze direction, and collision score is further determined based on the information on the driver's gaze direction. The information on the driver's or user's gaze direction can be used as an additional input in the step of determining or computing the collision score, in order to improve the performance.

In an embodiment, the notification comprises information presented on a side of the vehicle where the obstacle is detected. The notification is thus arranged for the purpose of producing a physiological user's reaction of directing his gaze to the side where the information is presented.

The notification can be dynamically generated by changing at least one parameter of said notification based on a distance between the vehicle and the detected obstacle.

In an embodiment, the notification is generated with a frequency that varies based on a distance between the vehicle and the detected obstacle, said frequency including at least one of an emission frequency and a frequency of a physical signal. For example, the information signaling the risk of collision is generated or emitted in the user interface system with a frequency that increases as the distance between the vehicle and the detected obstacle decreases. In another example, the information signaling the risk of collision is represented by a physical signal (e.g., light, visual, acoustic or haptic) and a frequency of the physical signal varies based on the distance between the vehicle and the detected obstacle.

In an embodiment, the step of determining a risk of collision is carried out if a speed of the vehicle is higher than a predetermined threshold speed, preferably 8 km/h or more.

In an embodiment, the step of generating the notification in the user interface system includes a step of emitting a light signal on a side mirror or on a front side window frame of the vehicle, on a side of the vehicle where the obstacle is detected. For example, said light signal can be emitted along at least part of a peripheral edge of the side mirror or along at least part of a peripheral edge of the front side window frame.

In the step of emitting a light signal, at least one a light frequency and an emission frequency of the light signal may be dynamically modified based on a distance of the vehicle to the detected obstacle.

In an embodiment, the step of generating the notification in the user interface system may include a step of displaying images acquired from at least one camera of the vehicle, said images including the detected obstacle, and adding a graphic indication of said obstacle in the displayed images.

The graphic indication can include for example a highlighted area corresponding to an area of the obstacle in the displayed image.

In an embodiment, the displayed images may acquired from at least one parking camera of the vehicle, used while the vehicle is driving.

Alternatively, the displayed images may represent a bird-eye view acquired from a plurality of camera sensors of the vehicle.

The images can be displayed on a dashboard of the vehicle, or on a display device present in a driving field of view of the vehicle. This allows not to disturb the user while driving the vehicle.

In an embodiment, the step of generating a notification in the user interface system includes a step of emitting an acoustic signal and at least one of an acoustic frequency and an emission frequency of the acoustic signal is dynamically modified based on a distance of the vehicle to the detected obstacle.

In an embodiment, the step of generating a notification includes a step of producing a haptic feedback signal by increasing a resistance torque of a steering wheel of the vehicle in a direction of the detected obstacle.

The method may further include a step of detecting a low obstacle, such as a curbstone, lower than the threshold height, based on sensed data from one or more sensors.

The present disclosure also concerns a system for assisting a user while driving a vehicle, comprising at least one sensor, a processor, and a user interface system, configured to carry out the method previously defined.

The present disclosure further concerns:
- a computer program comprising instructions to cause the above-defined system to execute the steps of the method previously defined;
- a computer-readable medium having stored thereon the computer program above defined;
- a vehicle including a system, as above-defined, for assisting a user while driving the vehicle.

### BRIEF DESCRIPTION OF THE DRAWINGS

Other features, purposes and advantages of the disclosure will become more explicit by means of reading the detailed statement of the non-restrictive embodiments made with reference to the accompanying drawings.

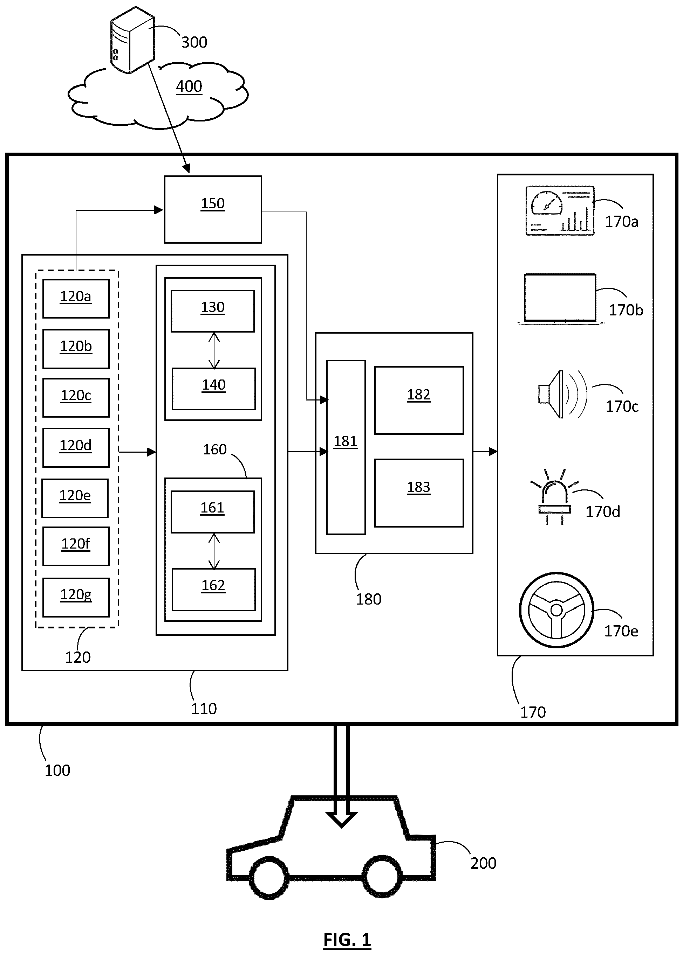

Figure 1 shows a vehicle including a system for assisting a user while driving a vehicle to avoid collision with a low obstacle, according to an embodiment.
Figure 2 is a flowchart of a method for assisting a user while driving a vehicle to avoid collision with a low obstacle, corresponding to the operation of the system of figure 1, according to an embodiment.

### DETAILED DESCRIPTION

The present disclosure concerns a system 100 for assisting a user while driving a vehicle 200. The systems 100 has the function of assisting the user, or driver, in performing the task of manually driving the vehicle 200 to avoid a collision of the vehicle 200 with a low obstacle or object, which may cause damage on a vehicle's wheel for example.

The system 100 comprises a monitoring system 110, a user interface system 170, and a driver assistance module 180.

The monitoring system 110 of the vehicle 200 has the function of detecting and monitoring different types of information such as:
- information related to an environment surrounding the vehicle 200;
- information or parameters related to the vehicle 200;
- optionally, information related to a driver of the vehicle 200.

The monitoring system 110 may be implemented with hardware and software. It monitors various aspects related to the vehicle 200, an environment surrounding the vehicle 200 and, optionally, a driver of the vehicle 200.

The monitoring system 110 may include different types of sensors 120. For example, the sensors can comprise camera sensor(s) 120a, Lidar sensor(s) 120b, radar sensor(s) 120c, ultrasonic sensor(s) 120d, vehicle speed sensor(s) 120e, GPS receiver 120f, and/or parking or proximity sensor(s) 120g, etc... The camera sensors 120a can include one or more external camera sensors for sensing an external environment around the vehicle 200 and one or more internal camera sensors for sensing a driver of the vehicle 200, for example for detecting and tracking the driver's eye gaze direction.

The monitoring system 110 may further include processing means, including for example one or more control units 130, or ECUs (Electronic Control Unit), executing one or more computer program(s) or instructions 140. The processing means are configured to process sensed data received from the sensors 120 and determine, based on the sensed data, various types of information including information or parameters related to the vehicle 200, information related to an environment surrounding the vehicle 200 and, optionally, information related to a driver of the vehicle 200, as will be described later in more detail. Alternatively, the sensor devices may include internal means for processing the sensed data and determining information based on the sensed data.

The monitoring system 110 further includes an obstacle detection module 160 for detecting a low obstacle, lower than a threshold height H_{TSH}, based on sensed data from one or more sensors 120. The one or more sensors 120 used for the detection of a low obstacle may include one or more camera sensors 120a, and/or one or more radar sensors 120c, and/or one or more Lidar sensors 120b. In an embodiment, one or more parking or proximity sensors 120g may also be used for the detection of a low obstacle, lower than the threshold height H_{TSH}. The obstacle detection module 160 is configured to process the sensed data received from the sensor(s) 120 to detect an obstacle lower than the threshold height H_{TSH} and determine obstacle information that may comprise at least part of:
- an indication of the type of the low obstacle detected,
- location information of the detected low obstacle relative to the vehicle 200,
- a distance between the vehicle 200 and the detected low obstacle, and
- a size and/or form of the detected low obstacle.

In an embodiment, the threshold height H_{TSH} can be set to a ride height of the vehicle 200. This allows to detect an obstacle or object, such as a curb or curbstone, that is likely to cause damage to a vehicle's wheel. In an embodiment, the obstacle can be an object protruding from the ground, that is higher than half the sidewall height of the vehicle tires and lower than a ride height of the vehicle 200.

The obstacle detection module 160 can be dedicated to the detection of curbs or curbstones. In that case, it is configured to detect and recognize a curb or curbstone based on the sensed data received from one or more sensors 120 (e.g., Lidar sensor(s), and/or camera sensor(s), and/or radar sensor(s)).

The obstacle detection module 160 may be implemented with hardware and software. For example, it comprises a control unit or ECU or processor 161 executing a computer program 162 including instructions to cause the control unit 161 to process sensed data received from one or more sensors 120 and, based on the sensed data, detect an object or obstacle lower than the threshold height H_{TSH}, such as a curb or curbstone, and determine obstacle information as previously described.

The user interface system 170 allows interaction between the vehicle 200 and a user such as a driver of the vehicle 200. It enables effective operation and control of the vehicle 200 by the user or driver and provides, or conveys, information to the user to assist said user while operating the vehicle 200, for example while manually driving or parking.

In particular, the user interface system 170 can include different user interface devices adapted to convey or present information to a user, such as a dashboard 170a, one or more display devices 170b, one or more loudspeakers or acoustic signal emitting devices 170c, one or more lighting devices 170d, a device 170e for producing a haptic or tactile feedback for example in the steering wheel, etc...

The user interface system 170 may be implemented with hardware and software. It may include at least one control unit or ECU executing one or more computer programs to control the operation of the user interface devices 120a-120e.

The driver assistance module 180 has the function of assisting a user, or driver, in performing the task of driving the vehicle 200, such as the task of manually driving the vehicle 200, to prevent a collision of the vehicle 200 with a low obstacle, lower than the threshold height H_{TSH}, for example a curb or curbstone.

The driver assistance module 180 can include an acquisition or reception interface 181, a risk determination module 182, and a notification generation module 183.

The reception interface 181 is configured to receive from the monitoring system 110 obstacle information related to a low obstacle detected by the detection module 160, parameters related to the vehicle 200 and optionally information related to a driver's gaze direction.

The risk detection module 182 has the function of determining a collision score indicative of a risk of collision of the vehicle 200 with a detected low obstacle lower than the threshold height H_{TSH}, based on information received from the monitoring system 110, as described later in the description of the method. For example, the collision score can be a probability value that the vehicle 200 is likely to hit the detected low obstacle. In an embodiment, the higher the collision score the more probable the collision of the vehicle 200 with the detected obstacle.

The notification generation module 183 is configured to generate a notification in the user interface system 170 of the vehicle 200, if the collision score is higher than a predetermined threshold TSH_SCORE, the notification comprising information presented to the user or driver in an arrangement for modifying a driving trajectory of the vehicle for the purpose of avoiding a collision of the vehicle 200 with the detected low obstacle. More precisely, the information is presented to the user in an arrangement that continuously assists and guides the user while driving the vehicle 200 to avoid collision of the vehicle 200 with the detected low obstacle. The information of the notification signals the risk of collision.

The notification can be dynamically generated, by being continuously updated over time and optionally changing at least one parameter (e.g., a frequency, as described later) of the notification, based on the received obstacle information, as explained later in more detail.

Optionally, the parameters related to the vehicle 200 and/or information related to the driver's gaze direction may be used to update the notification and/or change a parameter of the notification over time. This allows to improve a continued and guided human-machine interaction between the user interface system 170 and the user driving the vehicle 200 to assist the user or driver while driving the vehicle 200 for the purpose of avoiding a collision of the vehicle 200 with the detected obstacle.

The driver assistance module 180 can be implemented with hardware and software. In an embodiment, it includes a processor or control unit or ECU and one or more computer program(s) running on the processor and including instructions to cause the processor to execute one or more actions, including determining a collision score related to a risk of collision with a detected obstacle, comparing the determined collision score to the threshold TSH_SCORE and, if the collision score is higher than the threshold TSH_SCORE, generating a notification in the user interface system 170, for assisting a user or driver in performing the task of driving the vehicle 200 to avoid a collision of the vehicle 200 with the detected low obstacle, lower than the threshold height H_{TSH}, as will be described later in more detail in the description of the method.

Optionally, the system 100 may further include a trajectory prediction module 150 configured to predict a trajectory of the vehicle 200, based on location data of the vehicle 200, motion information of the vehicle 200 and map data. It can be implemented with hardware and software.

The location data of the vehicle 200 can be provided by the GPS receiver 120f. The motion information of the vehicle 200 can be provided by the monitoring system 110. The map data can be received by the vehicle 200 from a remote map data provider or server 300, through a communication network 400 to which the vehicle 200 is connected, or from a local map data database of the vehicle 200 (not represented). The received map data can be based on a GPS location of the vehicle 200 and relate to a geographical area where the vehicle 200 is driving.

The trajectory prediction module 150 has the function of predicting a plurality of trajectories of the vehicle 200 and attribute to each predicted trajectory a likelihood score indicative of the probability that the vehicle 200 will drive along said predicted trajectory. The prediction may be a short-term prediction for predicting trajectories of the vehicle 200 within a time window starting from a current time, namely between t and t+Δt where t is the current time and Δt represents the duration of the time window. For example, the prediction can concern a short-term future period of a few seconds from the present time (e.g., between 1 and 5 seconds, typically 2 or 3 seconds).

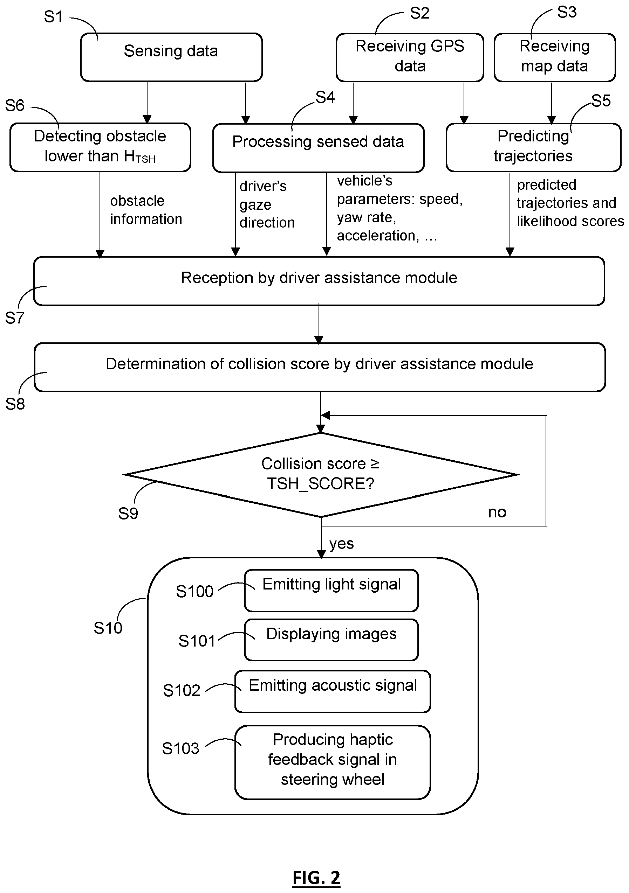

The method for assisting a user while driving the vehicle 200 to prevent a collision of the vehicle 200 with a detected low obstacle, such as a curbstone, lower than the threshold height H_{TSH}, will now be described, based on figure 2, according to an embodiment. The method corresponds to the operation of the system 100.

The method comprises a step S1 of sensing data, performed by at least part of the sensors 120. The sensed data may include at least part of image data from external camera sensor(s), image data from internal camera sensor(s), radar data, Lidar data, vehicle motion or speed data.

Optionally, the method may further comprise a step S2 of receiving location or GPS data of the vehicle 200, by the GPS receiver 120f.

The steps S1 and S2 can be performed concomitantly and continuously while the vehicle 200 is driving.

The method may further include a step S3 or receiving map data related a geographical area in which the vehicle 200 is driving, for example from the server 30. The map data can be received by a connection interface (not represented) connecting the vehicle 200 to the network 400 and transmitted to the trajectory prediction module 150, while the vehicle 200 is driving.

In a step S4, the sensed data and optionally the GPS data of the vehicle 200 are processed by one or more ECUs 130 of the vehicle 200 to determine different types of information including:
- parameters related to the vehicle 200;
- optionally, information related to a driver's gaze direction.

In an embodiment, the parameters related to the vehicle 200, determined in the step S4, can include at least part of: vehicle longitudinal speed data, vehicle lateral speed data, yaw rate data, vehicle longitudinal acceleration data, and vehicle lateral acceleration data.

The information related to a driver's gaze direction indicates a direction in which the driver is looking.

In an embodiment, optionally, in a step S5, the trajectory prediction module 150 predicts a plurality of trajectories for the vehicle 200 associated with likelihood scores, based on the location or GPS data of the vehicle 200, motion information of the vehicle 200 and map data. Thus, the parameters related to the vehicle 200 may further include the one or more predicted trajectories of the vehicle 200 and, for each predicted trajectory, a likelihood score indicative of the probability that the vehicle 200 will drive along said predicted trajectory. The prediction of trajectories may predict trajectories of the vehicle 200 within a time window of a few seconds starting from a current time.

The method further includes a step S6, performed by the obstacle detection module 160, of detection of a low obstacle lower than the threshold height H_{TSH} in an environment surrounding the vehicle 200, based on sensed data from one or more sensors 120. In an embodiment, the step S6 can be dedicated to the detection of curbs or curbstones. If a low obstacle, lower than the threshold height H_{TSH}, is detected, the obstacle detection module 160 determines information related to the detected obstacle that may include:
- an indication of the type of the detected obstacle, for example "curb" or "curbstone";
- a distance to the detected obstacle relative to the vehicle 200 (i.e., a distance between the vehicle 200 and the detected obstacle), and a direction of the detected obstacle relative to the vehicle 200, and/or
- a location of the detected obstacle relative to the vehicle 200.

The information related to the detected obstacle may optionally include size and/or form information on the detected obstacle.

Optionally, the obstacle detection module 160 may use map data as input data for detecting an obstacle lower than the threshold height H_{TSH}, such as a curbstone, in an environment surrounding the vehicle 200. The map data may indicate for example the curbstones or other objects lower than the threshold height H_{TSH}, present in the area where the vehicle 200 is driving.

The detection of a low obstacle, such as a curb or curbstone, lower than the threshold height H_{TSH}, may be performed by using a known detection process, for example of known process of curb detection based on Lidar data.

The steps S1 to S6 can be performed continuously while the vehicle 200 is driving.

If an obstacle, for example a curb or curbstone, is detected in the step S6, the obstacle information is transmitted to the driver assistance module 180. Furthermore, the parameters related to the vehicle 200 and optionally the information related to the driver's gaze direction are also transmitted to the driver assistance module 180. The parameters related to the vehicle 200 include motion properties of the vehicle (e.g., longitudinal speed, a lateral speed, yaw rate, a longitudinal acceleration, and/or a lateral acceleration) determined in the step S4, and optionally the predicted trajectories associated with their likelihood scores determined in the step S5.

In a step S7, the reception module 181 of the driver assistance module 180 receives the obstacle information, the parameters related to the vehicle 200 and, optionally, the information related to the driver's gaze direction.

In a step S8, the risk determination module 182 determines a collision score indicative of a risk of collision of the vehicle 200 with the detected obstacle, based on the received obstacle information, parameters related to the vehicle 200 and optionally information related to the driver's gaze direction. In the step S8, the risk determination module 182 estimates and analyzes the risk that the vehicle 200 hits or collides with the detected obstacle by using motion properties of the vehicle 200 and the location of the detected obstacle, and computes a collision score based on this estimation or analysis. To improve the performance of the estimation or analysis of the risk of collision, the risk determination module may optionally use additional information such as the predicted trajectories of the vehicle 200 and/or the driver's gaze direction, as described below.

In an embodiment, the collision score is computed by the risk determination module 182 with a predetermined function using as inputs at least location information of the detected obstacle, relative to the vehicle 200, a longitudinal speed of the vehicle 200 and a yaw rate of the vehicle 200. However, the speed and/or yaw rate of the vehicle 200 might be optional. The location information of the detected obstacle may include a position of the detected obstacle relative to the vehicle 200, or a distance between the vehicle 200 and the detected obstacle and a direction of the detected obstacle relative to the vehicle 200.

In an embodiment, the risk determination module 182 may use additional inputs to compute the collision score, such as:
- the predicted trajectories of the vehicle 200,
- the likelihood scores of the predicted trajectories,
- the lateral speed of the vehicle 200,
- the longitudinal acceleration of the vehicle 200,
- the lateral acceleration of the vehicle 200, and/or
- the direction of the driver's gaze.

The above additional input data allows to improve the performance for computing the collision score.

Instead of using a function for computing the collision score, the risk determination module 182 may include a neural network configured to receive input data as previously described (obstacle information related to the detected obstacle, parameters related to the vehicle 200 and optionally information related to the driver's gaze direction), and to output a corresponding collision score. In a preliminary training phase, the neural network can be trained with a collection of input/output training data including:
- a plurality of sets of input data including, as previously described, obstacle information related to the detected obstacle, parameters related to the vehicle 200 (speed, acceleration, and/or trajectories, etc..) and optionally information related to the driver's gaze direction, and
- for each set of input data, a corresponding predetermined collision score.

In an embodiment, the steps S6-S8 of detecting an obstacle lower than the threshold height H_{TSH} and determining a collision score are performed while the vehicle 200 is driving. In other words, these steps S6-S8 are not performed while the vehicle 200 is parking or performing maneuvers. The steps S6-S8 may be performed only if the vehicle speed is higher than a predetermined threshold, for example higher than 8 km/h.

If no low obstacle is detected by the detection module 160, the steps S7 and S8 are not executed.

After determination of the collision score in the step S8, the determined collision score is compared to the predetermined threshold score TSH_SCORE, in a step S9.

If the collision score is higher than the threshold TSH_SCORE, the driver assistance module 180 generates a notification in the user interface system 170, in a step S10. The notification comprises information presented to the user, or driver, in an arrangement for modifying the driving trajectory of the vehicle 200 for the purpose of avoiding a collision with the detected low obstacle.

The notification includes an information, that can be visual, acoustic and/or haptic, for informing or alerting the driver that there is a high risk collision of the vehicle 200 with a low obstacle such as a curb or curbstone. The notification is such that this information is presented or conveyed to the user or driver in an arrangement that continuously assists or guides the user or driver in performing the task of manually driving the vehicle 200. Different types or embodiments of notification can be implemented, as described later in the description.

The notification can be dynamically generated by changing the information indicating a risk of collision and/or the arrangement in which this information is presented to the user over time, at least based on the obstacle information, for example based on the distance between the vehicle 200 and the detected obstacle, that is continuously monitored while driving, if the obstacle is detected.

The information for informing the driver of the risk of collision may be presented in the user interface system 170 on a side of the vehicle 200 where the obstacle has been detected, for the purpose of producing a physiological reaction of the driver consisting in directing the driver's eye gaze towards a side of the vehicle 200 where the obstacle has been detected.

Furthermore, the notification may be dynamically generated with a frequency that varies based on a distance between the vehicle 200 and the detected obstacle. The variable frequency of the notification may be an emission frequency for emitting the information signaling a risk of collision to the user of and/or a frequency of a physical signal (e.g., an acoustic or light signal) representing the information, as explained later in more detail.

The notification can be implemented according to different embodiments that are described below.

In a first embodiment, the step S10 of generating a notification in the user interface system 170 includes a step S100 of emitting a light signal indicating a risk of collision with the detected low obstacle. The light signal can be emitted by one or more light sources 170d, such as LEDs, on a side mirror of the vehicle 200 for the purpose of producing a physiological reaction of the driver consisting in directing and/or moving the driver's eye gaze towards a side of the vehicle 200 where the obstacle has been detected. The light signal can be emitted along at least part of a peripheral edge of the side mirror, for example top or bottom edge of the side mirror. Advantageously, this side mirror can be located on a side of the vehicle 200 where the obstacle is detected. Alternatively, or additionally, the light signal can be emitted on a window frame of the front side window on the side of the vehicle 200 where the obstacle is detected. The light signal can be emitted along at least part of a peripheral edge of the front side window frame, for example the bottom edge of the window frame. In case of detection of a curbstone, the form of the light signal extending along the top or bottom edge of the side mirror or along the bottom edge of the front side window frame allows to schematically represent the form of a curbstone, which contributes to assist the driver in the operation of driving the vehicle 200 to avoid collision with the detected curbstone.

In the step S100 of emitting a light signal, an emission frequency of the light signal can be dynamically modified based on a distance between the vehicle 200 and the detected obstacle. For example, the light signal may initially flash slowly and then more and more quickly as the distance between the vehicle 200 and the detected obstacle decreases.

Alternatively, or additionally, a light frequency of the light signal can be dynamically modified based on the distance between the vehicle 200 and the detected obstacle. Thus, the colour of the light signal can be dynamically changed over time based on a distance of the vehicle 200 to the detected obstacle. For example, the light signal may be orange if the distance between the vehicle 200 and the obstacle is more than a predetermined threshold distance and turn to red if the distance is less that this predetermined threshold distance.

In a second embodiment, the step of generating the notification in the user interface system 170 includes a step S101 of displaying images acquired from at least one camera sensor 120a of the vehicle 200, said images including the detected obstacle, and adding a graphic indication of the detected obstacle in the displayed images. For example, the graphic indication includes a highlighted area corresponding to an area of the detected obstacle in the displayed image. The images can be displayed on the dashboard 170a of the vehicle 200 or on a display device 170b located in a driving field of view of the vehicle 200, to avoid disturbing the driver while driving.

The displayed images are acquired by at least one camera sensor 120a of the vehicle 200. The camera sensor(s) 120a may be dedicated to the detection of low obstacles lower than the threshold height H_{TSH}. For example, the camera sensor(s) are dedicated to the detection of curbs or curbstones. Alternatively, the camera sensor(s) 120a used for acquiring the images of the detected low obstacle may be parking or proximity camera sensor(s) 120g. In a variant, the images of the detected obstacle are acquired by one or more camera sensors for generating bird-eye views of the environment around the vehicle 200. In that case, the displayed images are bird-eye views of the vehicle 200 and its environment.

In a third embodiment, the step S10 of generating a notification in the user interface system 170 includes a step S102 of emitting an acoustic or sound signal indicating the risk of collision with the detected low obstacle.

The acoustic frequency and/or an emission frequency of the acoustic signal may be dynamically changed based on a distance between the vehicle 200 and the detected obstacle. The emission frequency of the acoustic signal may increase as the distance between the vehicle 200 and the detected obstacle is decreasing. For example, the acoustic signal may be a sequence of short interval sounds with a frequency increasing if the distance between the vehicle 200 and the detected obstacle decreases. The emission frequency may be inversely proportional to the distance between the vehicle 200 and the detected obstacle. Alternatively, or additionally, the acoustic signal may become more and more high-pitched.

The acoustic signal can be emitted by a loudspeaker 170c located in the vehicle 200 in a position indicative of where the obstacle has been detected for the purpose of producing a physiological reaction of the driver consisting in directing and/or moving his eye gaze towards the detected obstacle.

In a fourth embodiment, the step S10 of dynamically generating a notification includes a step S103 of producing a haptic feedback signal by increasing a resistance torque of the steering wheel 170e of the vehicle 200 in a direction of the detected obstacle.

The step of notification S10 can include one of the steps S100 to S103. Alternatively, different embodiments of the step of notification S10 may be mixed or combined. In other words, the step of notification S10 may include two or more of the steps S100 to S103.

The step of notification S10 is continuously carried out by the driver assistance module 180 if the collision score is higher than the predetermined threshold SCORE_TSH.

If the collision score is lower than the predetermined threshold SCORE_TSH, the step of notification S10 is not executed, or is stopped. However, the driver assistance module 180 continues to determine the collision score in the step S8, compare it to the threshold score TSH_SCORE in the step S9, while the vehicle 200 is driving and a low obstacle has been detected in the step S6.

The present disclosure also concerns:
- a computer program comprising instructions to cause the system 100 to execute and/or control the execution of the steps S1 to S10 of the method previously described;
- a computer-readable medium having stored thereon the computer program above defined.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method for assisting a user while driving a vehicle (200), said vehicle (200) comprising at least one sensor (120), a processor (180) and a user interface system (170), the method including the steps of:
- receiving (S7), by the processor (180), obstacle information related to an obstacle lower than a threshold height, detected by the at least one sensor (120) in an environment surrounding the vehicle (200), and parameters related to the vehicle (200);
- determining (S8), by the processor (180), a collision score indicative of a risk of collision of the vehicle (200) with the detected obstacle, based on the received obstacle information and parameters related to the vehicle (200); and
- if the collision score is higher than a predetermined threshold (S9), generating (S10) a notification in the user interface system (170), wherein said notification comprises information presented to the user in an arrangement for modifying a driving trajectory of the vehicle (200) to avoid the collision with the detected obstacle.

2. The method according to claim 1, wherein the parameters related to the vehicle (200) include motion parameters of the vehicle (200) comprising at least part of a longitudinal vehicle speed, a lateral vehicle speed, a yaw rate of the vehicle, a longitudinal acceleration of the vehicle, and a lateral acceleration of the vehicle.

3. The method according to any of claims 1 and 2, wherein the parameters related to the vehicle (200) include one or more predicted trajectories of the vehicle and, for each predicted trajectory, a likelihood score indicative of the probability that the vehicle will drive along said predicted trajectory.

4. The method according to any of claims 1 to 3, wherein the step (S7) of receiving further includes receiving information on a driver's gaze direction, and collision score is further determined (S8) based on the information on the driver's gaze direction.

5. The method according to any of claims 1 to 4, wherein the notification comprises information presented on a side of the vehicle (200) where the obstacle is detected.

6. The method according to any of claim 1 to 5, wherein the notification is generated with a frequency that varies based on a distance between the vehicle (200) and the detected obstacle, said frequency including at least one of an emission frequency and a frequency of a physical signal.

7. The method according to any of claims 1 to 6, wherein the step (S8) of determining a risk of collision is carried out if a speed of the vehicle (200) is higher than a predetermined threshold speed, preferably 8 km/h or more.

8. The method according to any of claims 1 to 7, wherein the step (S10) of generating the notification in the user interface system (170) includes a step (S100) of emitting a light signal on a side mirror or on a front side window frame of the vehicle (200), on a side of the vehicle (200) where the obstacle is detected.

9. The method according to claim 8, wherein said light signal is emitted along at least part of a peripheral edge of the side mirror or a peripheral edge of the front side window frame.

10. The method according to any of claims 1 to 9, wherein the step (S10) of generating the notification in the user interface system (170) includes a step (S101) of displaying images acquired from at least one camera of the vehicle, said images including the detected obstacle, and adding a graphic indication of said obstacle in the displayed images.

11. The method according to any of claims 1 to 10, wherein the step (S10) of generating a notification in the user interface system (170) includes a step of emitting an acoustic signal and at least one an acoustic frequency and an emission frequency of the acoustic signal is dynamically modified based on a distance of the vehicle (200) to the detected obstacle.

12. The method according to any of claims 1 to 11, wherein the step (S10) of generating a notification includes a step (S103) of producing a haptic feedback signal by increasing a resistance torque of a steering wheel (170e) of the vehicle (200) in a direction of the detected obstacle.

13. A system (100) for assisting a user while driving a vehicle, comprising at least one sensor (120), a processor (180), and a user interface system (170), configured to carry out the method according to any of claims 1 to 12.

14. A computer program comprising instructions to cause the system (100) of claim 13 to execute the steps of the method according to any of claims 1 to 12.

15. A vehicle including a system (100) according to claim 13 for assisting a user while driving the vehicle.
